# EUROPEAN PATENT SPECIFICATION

(11) **EP 2 153 042 B1**
(45) Date of publication and mention of the grant of the patent: **25.07.2018**
(21) Application number: 08769699.3
(22) Date of filing: 23.05.2008
(51) Int. Cl.: F23D 11/44, F23D 17/00

(54) **FUEL COMBUSTION**
KRAFTSTOFFVERBRENNUNG
SYSTÈME DE COMBUSTION DE COMBUSTIBLE

(30) Priority: 25.05.2007 US 931919 P
(43) Date of publication of application: 17.02.2010
(73) Proprietor: TIAX LLC, Cambridge, MA 02140 (US)
(72) Inventor: TARGOFF, Jason A., Cambridge, Massachusetts 02140 (US)
(74) Representative: Bridle, Andrew Barry
(86) International application number: PCT/US2008/064695
(87) International publication number: WO 2008/147987

(56) References cited:
- EP-A2- 1 553 653
- GB-A- 1 122 929
- US-A- 1 865 056
- US-A- 3 308 868
- US-A- 5 400 969
- US-A- 5 680 766
- US-A1- 2005 250 061

## Description

The invention relates to fuel combustion systems and methods.

### BACKGROUND

Liquid fuel burners can be classified into two categories: atomizing burners and vaporizing burners. In an atomizing burner, combinations of high pressures and high velocity air are used to flow liquid fuel through an orifice and to break up the fuel into small droplets. The small droplets of fuel mix with air, vaporize and burn, usually more readily than larger droplets of fuel, due to surface-to-volume ratio effects. In a vaporizing burner, fuel is heated and vaporized without the aid of atomization. The vaporized fuel then mixes with air and burns. In some cases, electric heaters are used to help vaporize the fuel; in other cases, heat from the combustion process is sufficient to vaporize the fuel. Pre-heated air can also help vaporize fuel from a wick.

Gaseous fuel burners need not vaporize fuel since the fuel starts in the vapor phase. Many gaseous fuel burners pre-mix or partially pre-mix fuel and air prior to combustion. A flame can be stabilized using recirculation of hot exhaust products, or by the use of a bluff body, or by the use of a foam or a fibrous material to pre-heat the fuel-air mixture and then to stabilize the flame on the metal fiber or foam, or by the use of a swirling flow-field which can re-circulate exhaust products and stabilize the flame over large variations in supply velocity.

EP1553653 and US 1,865,056 both disclose burners which are capable of switching between different fuels and which comprise a fuel inlet, a vaporizer cavity, a fuel outlet in fluid communication with the vaporizer cavity, and air inlet holes.

### SUMMARY

The invention relates to a fuel system as defined in the claims appended hereto.

The invention provides systems and methods to vaporize liquid fuels and to burn them with very low emissions in a burner that can also cleanly burn gaseous fuels. The burner and a controller for the burner can be used, for example, in external combustion engines, chemical processors, or heaters. In some embodiments, the burner is a swirl-stabilized burner that can stabilize combustion over a wide range of fuel types, including liquid or gaseous fuels, firing rates, and air/fuel ratios. Fuel flexibility of a burner or external combustion system can be very useful in emergency situations when choices of fuel can be limited.

The burner incorporates a mechanism for vaporizing liquid fuels without interrupting the swirl-stabilization and with limited tendency for coke formation. Gaseous fuels can operate on the same burner and pass through the vaporizing mechanism before mixing with air and combusting. The controller allows one system to operate with gaseous or liquid fuels without changes to any hardware; that is, a single burner can operate with gaseous fuels as well as liquid fuels.

In one aspect, the invention features a according to claim 1. Embodiments may include one or more of the following features. The system further includes a controller configured to control flow of fuel from the first source or the second source to the burner. The system further includes a controller configured to control flow of fuel from the first source or the second source to the burner based on a measurement of an output of the burner. The system further includes a sensor configured to sense a temperature or a stoichiometry of a fuel/gas mixture. The air inlet has at least one dimension greater than at least one dimension of the fuel outlet. The burner includes a plurality of air inlets located about a periphery of the burner, the air inlets configured to direct air at a non-perpendicular angle to the periphery. The burner includes a thermally conductive porous material configured to vaporize the liquid fuel. The burner includes a space surrounding the porous material. The burner includes an air inlet and projections downstream of the air inlet, the projections configured to direct air and vaporized fuel in curved direction. The burner includes a burner outlet defined by a portion of a cone. The cone has an angle between approximately 0° and approximately 120°. The burner includes a vaporizer cavity in fluid communication with a fuel inlet, a fuel outlet in fluid communication with the vaporizer cavity, an air inlet in fluid communication with the fuel outlet, and a burner outlet in fluid communication with the air inlet. The burner further includes a thermally conductive porous material in the vaporizer cavity. The porous material is in fluid communication with the burner outlet only through the fuel outlet. The burner further includes a heater configured to heat the porous material. The burner further includes a space located downstream of the air inlet and surrounding the vaporizer cavity. The burner further includes projections in the space and configured to direct air and gaseous fuel in curved direction.

In another aspect, the invention features a method of combustion according to claim 12, the method comprising:
providing a system according to any of appended claims 1 to 11; introducing a first fuel in a first phase through the fuel inlet of a combustion burner of the system; introducing a second fuel through the fuel inlet, the second fuel being in a second phase different from the first phase, wherein introduction of the second fuel to the combustion burner is performed without modifying the burner or the system.

Embodiments may include one or more of the following features. The method further includes controlling flow of the first fuel or the second fuel to the burner based on a measurement of an output of the burner. The method further includes measuring a temperature or an indication of stoichiometry of fuel air mixture of an output of the burner. The air inlet has at least one dimension greater than at least one dimension of the fuel outlet. The method further includes directing air at a non-perpendicular angle to a periphery of the burner. The method further includes vaporizing liquid fuel with a thermally conductive porous material. The method further includes mixing fuel and air in a space surrounding a porous material. The method further includes directing air and fuel in a curved direction. The burner includes a burner outlet defined by a portion of a cone. The cone has an angle from approximately 0° to approximately 120°. The burner includes a vaporizer cavity in fluid communication with a fuel inlet, a fuel outlet in fluid communication with the vaporizer cavity, an air inlet in fluid communication with the fuel outlet, and a burner outlet in fluid communication with the air inlet. The burner further includes a thermally conductive porous material in the vaporizer cavity. The porous material is in fluid communication with the burner outlet only through the fuel outlet. The burner further includes a heater configured to heat the porous material. The burner further includes a space located downstream of the air inlet and surrounding the vaporizer cavity. The burner further includes projections in the space and configured to direct air and gaseous fuel in curved direction. The burner includes a plurality of air inlets located about a periphery of the burner, the air inlets configured to direct air at a non-perpendicular angle to the periphery. The burner outlet is defined by a portion of a cone. The cone has an angle from approximately 0° to approximately 120°.

A combustion process not in accordance with the invention using the burners described herein can produce a swirl- stabilized flame with a Swirl Number of from approximately 0.2 to approximately 1.5 (such as from approximately 0.5 to approximately 0.7).

Having a swirling flame around a vaporizer can allow stabilization of a flame for multiple fuels. In some applications, liquid and gaseous fuels can not be used in the same burner because their flame lengths and flame speeds are significantly different. Having an intense swirling flame can compensate for the different flame characteristics. The swirling flame also allows a vaporizing surface to be placed in the center of the flame with minimal effect on the flame flow field.

Using high speed air around vapor holes can extract fuel vapor and promote pre-mixing of fuel and air, regardless of the type of fuel. Embodiments operate using liquid or gaseous fuels without modification to the burner.

Vaporization with a foam allows heat transfer to feed fuel even if coke has formed inside the foam. If and when coking occurs, it may not be catastrophic because the foam can distribute heat away from its hottest section so the coke does not prevent further vaporization by its insulating qualities.

The structure of the foam can be mostly voids, which can provide large vaporization surfaces. Having mostly voids and no small orifices can reduce the occurrence of clogging. The burners may not be readily poisoned by sulfur and/or do not readily decompose at high temperatures, which can occur with other multi-fuel burners such as catalytic burners.

The control system can operate on various fuels without changes to hardware.

As used herein, "without modification to a burner" means that no physical component is added to or removed from the burner. However, operational parameters of the burner, such as fuel flow rates, air flow rates, and temperatures, can change.

As used herein, "without modification to a system" means that no physical component is added to or removed from the system. However, operational parameters of the system, such as flow rates, temperatures, and state of switches, can change.

The details of one or more embodiments are set forth in the accompanying description below. Other aspects, features, and advantages of the invention will be apparent from the following drawings, detailed description of embodiments, and from the appending claims.

### BRIEF DESCRIPTION OF DRAWINGS

FIG. 1 is a perspective view of an embodiment of a multi-fuel burner with a conically-shaped end piece detached.
FIG. 2 is a cross-sectional view of the burner shown in FIG. 1, with the conically-shaped end piece attached.
FIG. 3 is a side view of the burner shown in FIG. 1, with the conically-shaped end piece removed.
FIG. 4 is a cross-sectional view of the burner shown in FIG. 3, taken along line 4-4.
FIG. 5 is an exploded, perspective view of the burner shown in FIG. 3.
FIG. 6 is a block diagram of an embodiment of a control system including a multi-fuel burner.
FIG. 7 is a schematic diagram of an embodiment of a control system including a multi-fuel burner.

### DETAILED DESCRIPTION

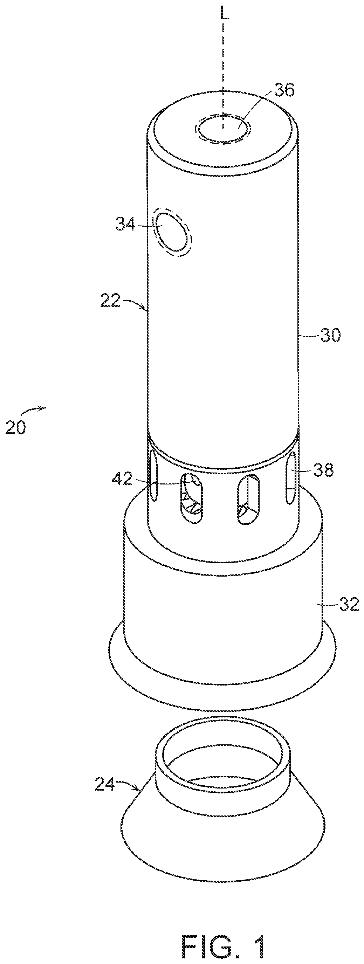

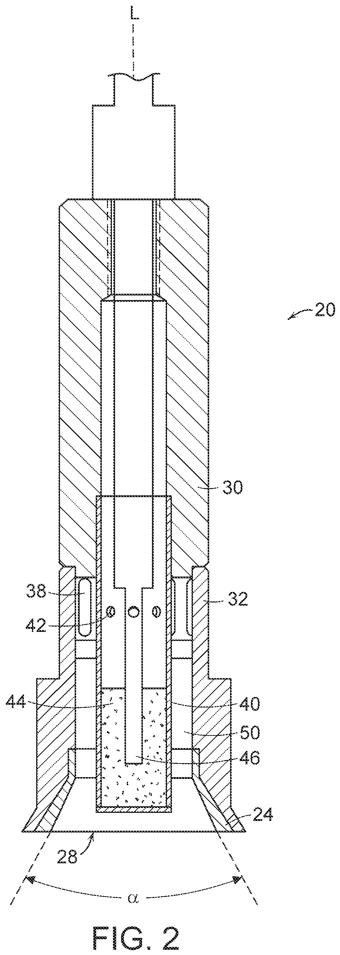

FIGS. 1 and 2 show a combustion burner 20 capable of being used to combust a liquid fuel as well as a gaseous fuel. Burner 20 can be used in systems such as external combustion engines, chemical processors, and heaters. As described herein, switching between combustion of a liquid fuel and combustion of a gaseous fuel can be performed without modifying burner 20 or the system including the burner (e.g., by adding or removing hardware). Furthermore, burner 20 can combust a wide range fuels with low emissions. For example, combustion of kerosene can have emissions of less than approximately 500 ppm CO, even with under 4% excess oxygen (phi of approximately 0.8) in the exhaust. Lower emissions, under 100 ppm CO, are possible with greater amounts of excess air (e.g., phi of 0.7-0.75) in the flame.

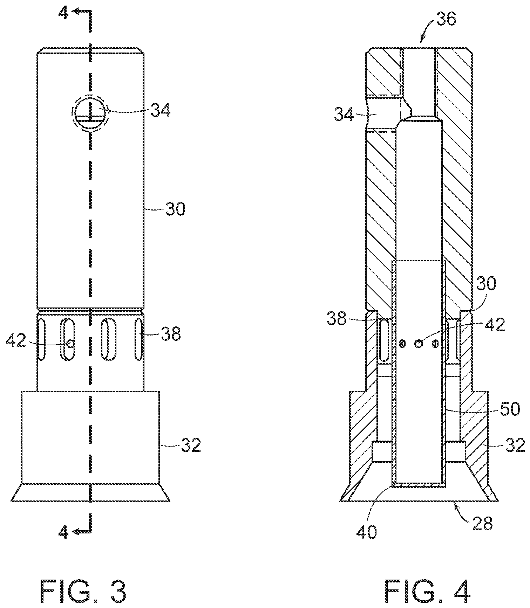

Referring also to FIGS. 3, 4 and 5, burner 20 generally includes a housing 22 and a vaporizer 40 in the housing. During operation, fuel is delivered into vaporizer 40 (e.g., to vaporize a liquid fuel), and gaseous fuel and air are mixed in a mixing zone 50 defined between the vaporizer and housing 22. The mixed fuel and air are combusted at a burner outlet 28. More specifically, housing 22 includes an upper body 30 and a lower body 32 that is joined to the upper body. Upper body 30 includes a fuel inlet 34 and a passageway 36 extending along the longitudinal axis (L) of the upper body. Lower body 32 includes a plurality of air inlets 38 arranged around the periphery of the lower body. As shown in FIGS. 1 and 2, burner 20 includes a conically-shaped end piece 24 (which can be unitarily formed with lower body 32) that defines burner outlet 28. Within housing 22, vaporizer 40 (as shown, a cylindrical body having an open end and a closed end) is coaxial with passageway 36 and burner outlet 28. Between vaporizer 40 and housing 22 is air/gaseous fuel mixing zone 50 (as shown, a cylindrical space) where gaseous fuel and air mix prior to combustion. Vaporizer 40 has a plurality of fuel outlets 42 (as shown, round openings) located around the periphery of the vaporizer. As shown in FIG. 2, within vaporizer 40, burner 20 further includes a thermally conductive porous material 44 (e.g., a metal foam) that is capable of vaporizing liquid fuel during use, and a glow plug 46 configured to heat the porous material. In some embodiments, burner 20 does not include porous material 44, but the burner may include glow plug 46.

During operation, a liquid fuel (such as diesel fuel) or a gaseous fuel (such as propane) is introduced through fuel inlet 34 for combustion at burner outlet 28. More specifically, in a "liquid mode" to combust a liquid fuel, glow plug 46 is energized at start-up to heat porous material 44, which is used to provide vaporization heat to vaporize the liquid fuel. Glow plug 46 may be energized for up to five minutes prior to fuel introduction and up to five minutes after ignition to ensure complete vaporization at start-up, but as combustion of the liquid fuel proceeds, vaporization heat can increasingly come from radiation from the combustion and convection from the hot gases near burner 20. When glow plug 46 and porous material 44 are sufficiently heated to vaporize the liquid fuel, the liquid fuel is introduced into burner 20 through fuel inlet 34. The liquid fuel then flows to and into porous material 44 where the liquid fuel is vaporized to a gaseous fuel, which then flows through fuel outlets 42. At the same time, air flows through air inlets 38 (e.g., forced by a fan, a blower, or a compressor), and this air mixes with the gaseous fuel exiting fuel outlets 42 in mixing zone 50 prior to combustion near burner outlet 28. The flame is initially ignited with an ignition source, with, for example, a spark plug, a glow plug, or a hot surface igniter, near outlet 28. Once burner 20 is lit, the ignition source is no longer required to maintain combustion. Glow plug 46 can be deenergized, for example, approximately five minutes after ignition.

In a "gas mode" to combust a gaseous fuel, the gaseous fuel is flowed through substantially the same flow path as the flow path of the liquid fuel described above. More specifically, the gaseous fuel is introduced into burner 20 through fuel inlet 34. The gaseous fuel can contact porous material 44 and absorb small quantities of heat, but the fuel does not undergo a phase change as with the liquid fuel. The gaseous fuel then flows through fuel outlets 42. Air introduced through air inlets 38 then mixes with the gaseous fuel exiting the fuel outlets 42 in mixing zone 50, and this air and fuel mixture is combusted near burner outlet 28, initially ignited with an ignition source, as described for the "liquid mode" of operation.

Referring again to FIG. 2, within vaporizer 40 and near its closed end, burner 20 includes porous material 44 that acts as a heat exchanger and a vaporizing surface. Gaseous fuels can enter and exit vaporizer 40 without heat transfer significant to the operation, since heat transfer from a hot surface to gas is far less efficient than heat transfer to a liquid. But with liquid fuels, porous material 44 can enhance the uniformity of the temperature in the vaporizing surface, limiting hot-spots and spreading out the heat, and provide extended surface area at this uniform temperature. During operation, fuel does not reach the hottest surface of the porous material 44 if it is vaporized by the porous material above the bottom surface. Lighter fractions of a heavy-fuel distillate can vaporize sooner, at lower temperatures, and over-heating the fuel and coke formation can be limited by this mechanism. Furthermore, in this vaporization approach, coke formation may not be catastrophic to burner 20. In fact, some very slow coke can build up before the coke formation can affect further fuel vaporization because of the large open volume and surface area of porous material 44. Thus, porous material 44 may be useful to increase the life of burner 20. Porous material 44 also provides good thermal conductivity such that if coke forms on the hottest surface, heat is sufficiently transferred away for vapor to form away from the surface.

Porous material 44 can be formed of any high-temperature tolerant, thermally conductive material having high surface area. For example, computational fluid dynamics analysis of a burner indicates a maximum temperature of a metal foam porous material approaching 600 °C when the burner is operating with kerosene fuel. As a result, in some embodiments, porous material 44 can withstand temperatures of at least approximately 600 °C, such as at least approximately 800 °C without any negative effect, such as oxidation or degradation. Porous material 44 can have a porosity between approximately 60% and approximately 95%. The cell size of porous material 44 can be between approximately 10 ppi (pores per inch) and 100 ppi to gain the advantage of high surface area without negatively affecting flow resistance into the porous material. The structure of porous material 44 provides vaporizing surfaces that remain to provide the heat required to vaporize liquid fuel, for example, if part of the porous material starts to fill with coke. Examples of porous material 44 include metal foams, such as those that include (e.g., is formed entirely) stainless steel or an iron-chromium (FeCr) alloy.

Still referring to FIG. 2, when a gaseous fuel (as delivered or after vaporization) exits fuel outlets 42, the gaseous fuel is mixed with air entering through air inlets 38. As shown, to enhance mixing between the gaseous fuel and the air, fuel outlets 42 and air inlets 38 are aligned along the direction of longitudinal axis L such that at least a portion of at least one fuel outlet overlaps with at least a portion of at least one air inlet along axis L. As shown in FIG. 2, fuel outlets 42 completely overlap with air inlets 38. This overlap allows incoming air to swipe gaseous fuel as the gaseous fuel exits vaporizer 40, thereby providing good mixing. In some embodiments, air inlets 38 have a dimension along longitudinal axis L that is equal to or greater than the dimension of fuel outlets 42 along the longitudinal axis L.

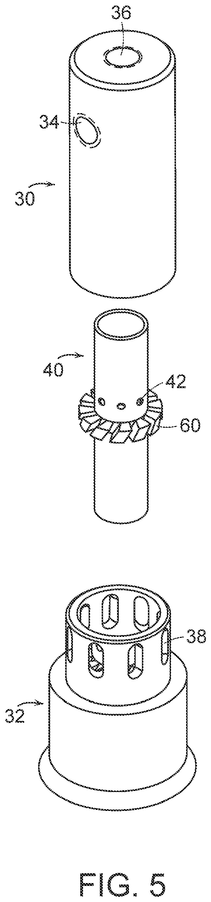

To further enhance mixing, air inlets 38 are angled to direct incoming air at a non-perpendicular angle to the periphery of burner 20. For example, the wall of lower body 32 that defines air inlets 38 can be angled so that incoming air is directed tangentially to the periphery of burner 20, thereby helping to swirl air and the air/gaseous fuel mixture in mixing zone 50. Referring to FIG. 5, to enhance mixing in mixing zone 50 even more, burner 20 includes structural features in the mixing zone that help to direct the air/gaseous fuel mixture in a curved or an angular direction about longitudinal axis L (e.g., tangential to the periphery of mixing zone 50). As shown, burner 20 includes a plurality of swirler vanes 60 extending from the outer periphery of vaporizer 40.

The angled direction of incoming air through air inlets 38 and/or the structural features in mixing zone 50 can help generate an air/gaseous fuel swirl in burner 20. The swirl can provide shear layers and an intense mixing stream, which can be particularly important for large fuel molecules with low diffusivity, such as kerosene or DF-2 diesel fuel. The swirl can also offer a flame stability mechanism that can work over a wide range of flame speeds or equivalence ratios. For example, kerosene can be burned with equivalence ratios of between approximately 0.6 and approximately 0.9. The same burner can operate with propane, with equivalence ratios of between approximately 0.6 and approximately 0.9, even though the flame speeds of the two fuels are not the same. Once the gaseous fuel and air mix, the combustion process is stabilized in a swirl-stabilized flame, with Swirl Number (S_{N}) of from approximately 0.2 to approximately 1.5 (such as from approximately 0.5 to approximately 0.7) at burner outlet 28, where S_{N} is defined as the ratio of the axial flux of the angular momentum to the axial flux of the axial momentum.

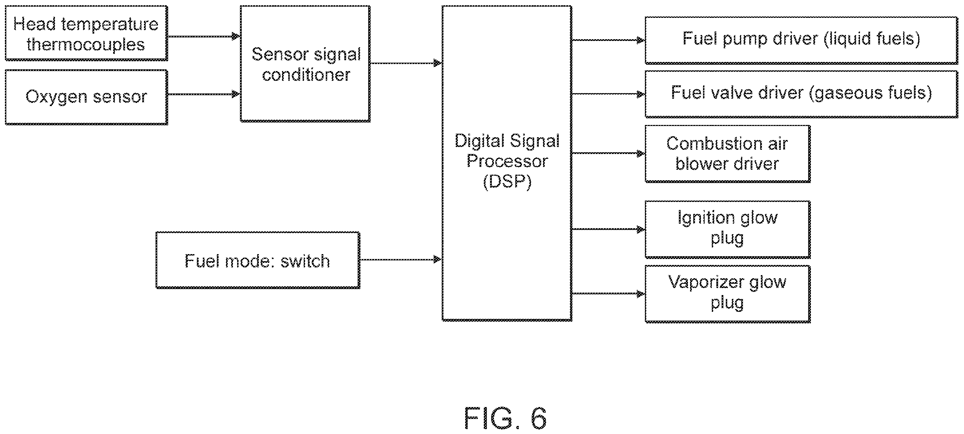

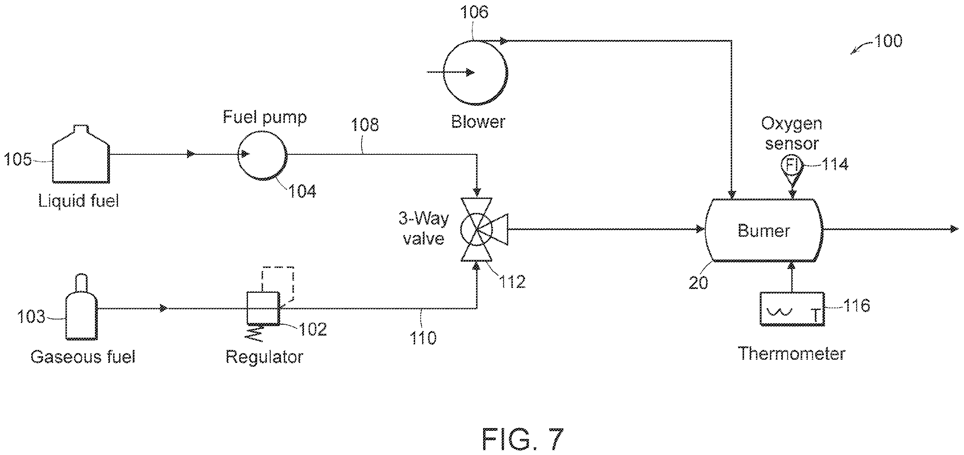

Referring now to FIGS. 6 and 7, the burner 20 described herein can be used in an adaptable control system 100. For example, the adaptable control system can be used with external combustion engines to control the combustion process with both gaseous and liquid fuels. As shown, control system 100 includes a mechanism for controlling the supply of air and fuels: a modulating valve 102 can be used to control the flow of gaseous fuels 103; a pump 104 can be used to control the liquid fuels 105; and a blower 106 can be used to supply combustion air to the system. As shown, system 100 includes fuel supply lines 108, 110 that have two connection points: one for liquid fuels 108 and one for gaseous fuels 110. A three-way valve 112 can be used in system 100 upstream of burner 20 to activate one of the lines. Valve 112 may have a mechanism, such as a switch, that provides a positive indication that the valve is in a selected mode. The fuel selector switch can provide a positive indication that valve 112 is in the selected gas mode for proper operation of system 100.

In operation, a user-set switch can activate a "liquid mode" or a "gaseous mode" to control system 100. The mode of system 100 can activate controls of burner 20, including, for example, the feed system for the fuel and the air. Fuel flow can be set based on a temperature set-point and a feedback signal from a temperature measurement 116 of the burner 20. Air flow can be set based on fuel flow-based set-point and a feedback signal indicating the stoichiometry of the combustion mixture. This hybrid control system, with a "feedback" term from a sensor 114, combined with a "feed-forward" term based on a fuel rate, can improve stability, e.g., relative to control systems based only on "feedback" responses. A user can activate or select a desired mode of system 100, and since burner 20 can operate very similarly with liquid and gaseous fuels, the same sensors 114, 116 can be used for feedback with both modes.

The feedback systems for the fuel and the air can use the same hardware for both modes, but can have different set-points, depending on the mode. In the case of an external combustion engine, for example, one can control the fuel rate to maintain a temperature on a specified body of the engine. The temperature can be measured by a thermocouple or a resistance temperature detector (RTD), for example. The temperature can be different, depending on whether the mode is liquid or gaseous fuel. The amount of air can be controlled using feedback from a stoichiometry sensor, such as an automotive oxygen sensor, a carbon-monoxide sensor, or a flame rectification sensor, for example. In the case of an oxygen sensor, oxygen content in the exhaust can be pre-specified and be different for liquid fuels and gaseous fuels. A different setting for the feedback value can be specified, depending on the mode of system 100, in order to maintain clean emissions whether liquid or gaseous fuel is being burned. Because flame speeds are more similar within each mode of fuels (gaseous fuels, including natural gas, propane, or butane, and liquid fuels , such as gasoline, kerosene, or diesel), only one oxygen setting may be needed for each mode, and the mode for system 100 can be specified with one switch. Pre-heated air can also aid in the vaporization process, e.g., if the burner air is recuperated. For example, the burner air can be recuperated by the exhaust gases and reach temperatures approaching 600 °C, depending on the extent of recuperation. Air of this temperature can aid in the vaporization process of the fuel.

As another example, referring to FIG. 2, burner outlet 28 can have an angle (α) from approximately 0° to approximately 120° (such as from approximately 40° to approximately 80°). A larger cone angle can extend the flame radially and may affect flame stability as well as how heat is transferred from the flame to the body it is heating. A burner can be designed so porous material 44 and/or glow plug 46 can be easily replaced after a selected operational interval (like a filter). For example, glow plug 46 and porous material 44 can be manufactured as one preassembled package that can be removed together and replaced, such as by using threads of the glow plug to remove and to install the package.

Additionally to introducing air into a burner via air inlets positioned at the side of the burner, air can be introduced from an end portion of the burner. For example, the burner can include an annular passageway that coaxially surrounds a glow plug and is in fluid communication with the vaporizer. When there is no glow plug, air can be introduced through passageway 36.

Terms that indicate position, such as "upper", "lower", and "bottom", are used for convenience and with reference to the figures, and are not limiting.

## Claims

1. A system, comprising :
a first source (105) adapted to comprise a liquid fuel;
a second source (103) adapted to comprise a gaseous fuel; and
a combustion burner (20) having a longitudinal axis (L) and which is connected to the first and second sources and adapted to be selectively in fluid communication with the liquid fuel and the gaseous fuel to receive the fuels,
wherein the burner (20) comprises a burner outlet (28), a fuel inlet (34) adapted to introduce the liquid or gaseous fuel for combustion at the burner outlet (28), a fuel outlet (42), and an air inlet (38) which overlaps at least a portion of the fuel outlet (42) along an axis which is radial to the longitudinal axis (L) of the burner (20);
and wherein the burner (20) is capable of switching between combustion of the liquid fuel and combustion of the gaseous fuel without modification to the burner (20) or the system.

2. The system of Claim 1, further comprising a controller (100) configured to control flow of fuel from the first source (105) or the second source (103) to the burner (20); optionally based on a measurement of an output of the burner (20).

3. The system of Claim 1, further comprising a sensor (114) configured to sense a temperature of a stoichiometry of the fuel/gas mixture.

4. The system of Claim 1, wherein the air inlet (38) has at least one dimension greater than at least one dimension of the fuel outlet (42).

5. The system of Claim 1, wherein the burner (20) comprises a plurality of air inlets (38) located about a periphery of the burner (20), the air inlets (38) being configured to direct air at a non-perpendicular angle to the periphery.

6. The system of Claim 1, wherein the burner (20) comprises a thermally conductive porous material (44) configured to vaporize the liquid fuel; optionally comprising a space surrounding the porous material (44).

7. The system of Claim 1, wherein the burner (20) further comprises projections (60) downstream of the air inlet (38), the projections (60) being configured to direct air and vaporized fuel in an angular direction.

8. The system of Claim 1, wherein the burner outlet (28) is defined by a portion of a cone; optionally having an included angle between 0° and 120°.

9. The system of Claim 1, wherein the burner (20) comprises a vaporizer cavity (40) in fluid communication with the fuel inlet, the fuel outlet is in fluid communication with the vaporizer cavity (40), and the burner outlet in fluid communication with the air inlet and the fuel outlet.

10. The system of Claim 9, wherein the burner (20) further comprises a thermally conductive porous material (44) in the vaporizer cavity (40); optionally wherein, the porous material is in fluid communication with the burner outlet only through the fuel outlet.

11. The system of Claim 10, wherein the burner further comprises a heater (46) configured to heat the porous material (44).

12. A method of combustion, comprising:
providing a system according to any of Claims 1 to 11;
introducing a first fuel in a first phase through the fuel inlet (34) of the burner (20) of the system;
introducing a second fuel through the fuel inlet (34), the second fuel being in a second phase different from the first phase, wherein introduction of the second fuel to the burner (20) is performed without modifying the burner (20) or the system.

13. The method of Claim 12, further comprising controlling flow of the first fuel or the second fuel to the burner (20) based on a measurement of an output of the burner (20).

14. The method of Claim 12, further comprising measuring a temperature or an oxygen content of an output of the burner (20).

15. The method of Claim 12, wherein the first phase or the second phase is a liquid phase and the method further includes the step of vaporizing the liquid phase with a thermally conductive porous material (44).

## Patentansprüche

1. System, umfassend:
eine erste Quelle (105), die dafür ausgelegt ist, einen flüssigen Kraftstoff zu umfassen;
eine zweite Quelle (103), die dafür ausgelegt ist, einen gasförmigen Kraftstoff zu umfassen; und
einen Verbrennungsbrenner (20), der eine Längsachse (L) aufweist und der mit der ersten und zweiten Quelle verbunden und dafür ausgelegt ist, selektiv in Fluidkommunikation mit dem flüssigen Kraftstoff und dem gasförmigen Kraftstoff zu sein, um die Kraftstoffe entgegenzunehmen, worin der Brenner (20) einen Brennerauslass (28), einen Kraftstoffeinlass (34), der dafür ausgelegt ist, den flüssigen oder gasförmigen Kraftstoff zur Verbrennung am Brennerauslass (28) einzubringen, einen Kraftstoffauslass (42) und einen Lufteinlass (38), der mindestens einen Abschnitt des Kraftstoffauslasses (42) entlang einer Achse überlappt, die radial zur Längsachse (L) des Brenners (20) ist, umfasst;
und worin der Brenner (20) zum Umschalten zwischen Verbrennung des flüssigen Kraftstoffs und Verbrennung des gasförmigen Kraftstoffs ohne Modifikation des Brenners (20) oder des Systems imstande ist.

2. System nach Anspruch 1, ferner umfassend ein Steuergerät (100), das dafür konfiguriert ist, den Fluss von Kraftstoff von der ersten Quelle (105) oder der zweiten Quelle (103) zum Brenner (20) zu steuern;
wahlweise basierend auf einer Messung eines Ausgangs des Brenners (20).

3. System nach Anspruch 1, ferner umfassend einen Sensor (114), der dafür konfiguriert ist, eine Temperatur einer Stöchiometrie des Kraftstoff-Gas-Gemisches zu erfassen.

4. System nach Anspruch 1, worin der Lufteinlass (38) mindestens ein Maß aufweist, das größer als mindestens ein Maß des Kraftstoffauslasses (42) ist.

5. System nach Anspruch 1, worin der Brenner (20) eine Mehrzahl von Lufteinlässen (38), die um eine Peripherie des Brenners (20) angeordnet sind, umfasst, wobei die Lufteinlässe (38) dafür konfiguriert sind, Luft unter einem nicht senkrechten Winkel zur Peripherie zu leiten.

6. System nach Anspruch 1, worin der Brenner (20) ein wärmeleitfähiges poröses Material (44) umfasst, das dafür konfiguriert ist, den flüssigen Kraftstoff zu verdampfen; wahlweise umfassend einen das poröse Material (44) umgebenden Raum.

7. System nach Anspruch 1, worin der Brenner (20) ferner Vorsprünge (60) nach dem Lufteinlass (38) umfasst, wobei die Vorsprünge (60) dafür konfiguriert sind, Luft und verdampften Kraftstoff in einer Winkelrichtung zu leiten.

8. System nach Anspruch 1, worin der Brennerauslass (28) durch einen Abschnitt eines Kegels definiert ist; wahlweise aufweisend einen eingeschlossenen Winkel zwischen 0 ° und 120 °.

9. System nach Anspruch 1, worin der Brenner (20) einen Verdampferhohlraum (40) in Fluidkommunikation mit dem Kraftstoffeinlass umfasst, wobei der Kraftstoffauslass in Fluidkommunikation mit dem Verdampferhohlraum (40) ist und der Brennerauslass in Fluidkommunikation mit dem Lufteinlass und dem Kraftstoffauslass ist.

10. System nach Anspruch 9, worin der Brenner (20) ferner ein wärmeleitfähiges poröses Material (44) im Verdampferhohlraum (40) umfasst; wahlweise, worin das poröse Material in Fluidkommunikation mit dem Brennerauslass nur durch den Kraftstoffauslass ist.

11. System nach Anspruch 10, worin der Brenner ferner ein Heizelement (46) umfasst, das dafür konfiguriert ist, das poröse Material (44) zu erhitzen.

12. Verfahren zur Verbrennung, umfassend:
Bereitstellen eines Systems nach einem der Ansprüche 1 bis 11;
Einbringen eines ersten Kraftstoffs in einer ersten Phase durch den Kraftstoffeinlass (34) des Brenners (20) des Systems;
Einbringen eines zweiten Kraftstoffs durch den Kraftstoffeinlass (34), wobei der zweite Kraftstoff in einer zweiten Phase ist, die sich von der ersten Phase unterscheidet, worin Einbringung des zweiten Kraftstoffs in den Brenner (20) ohne Modifizieren des Brenners (20) oder des Systems erfolgt.

13. Verfahren nach Anspruch 12, ferner umfassend Steuern des Flusses des ersten Kraftstoffs oder des zweiten Kraftstoffs zum Brenner (20) basierend auf einer Messung eines Ausgangs des Brenners (20).

14. Verfahren nach Anspruch 12, ferner umfassend Messen einer Temperatur oder eines Sauerstoffgehalts eines Ausgangs des Brenners (20).

15. Verfahren nach Anspruch 12, worin die erste Phase oder die zweite Phase eine flüssige Phase ist und das Verfahren ferner den Schritt des Verdampfens der flüssigen Phase mit einem wärmeleitfähigen porösen Material (44) beinhaltet.

## Revendications

1. Système, comprenant :
une première source (105) conçue pour comprendre un carburant liquide ;
une seconde source (103) conçue pour comprendre un carburant gazeux ; et
un brûleur de combustion (20) ayant un axe longitudinal (L) et connecté aux première et seconde sources, et conçu pour être, de manière sélective, en communication fluidique avec le carburant liquide et le carburant gazeux pour recevoir les carburants,
le brûleur (20) comprenant une sortie de brûleur (28), une entrée de carburant (34) conçue pour introduire le carburant liquide ou gazeux en vue d'une combustion au niveau de la sortie de brûleur (28), une sortie de carburant (42) et une entrée d'air (38) qui chevauche au moins une partie de la sortie de carburant (42) le long d'un axe qui est radial à l'axe longitudinal (L) du brûleur (20) ; et
le brûleur (20) étant capable d'alterner entre une combustion du carburant liquide et une combustion du carburant gazeux sans modifier le brûleur (20) ni le système.

2. Système selon la revendication 1, comprenant en outre un dispositif de régulation (100) conçu pour réguler le débit de carburant de la première source (105) ou de la seconde source (103) au brûleur (20) ; éventuellement sur la base d'une mesure d'une sortie du brûleur (20).

3. Système selon la revendication 1, comprenant en outre un capteur (114) conçu pour détecter une température d'une stoechiométrie du mélange carburant/gaz.

4. Système selon la revendication 1, dans lequel l'entrée d'air (38) a au moins une dimension supérieure à au moins une dimension de la sortie de carburant (42).

5. Système selon la revendication 1, dans lequel le brûleur (20) comprend une pluralité d'entrées d'air (38) situées autour d'une périphérie du brûleur (20), les entrées d'air (38) étant conçues pour diriger de l'air suivant un angle non perpendiculaire à la périphérie.

6. Système selon la revendication 1, dans lequel le brûleur (20) comprend un matériau poreux thermoconducteur (44) conçu pour vaporiser le carburant liquide ; comprenant éventuellement un espace entourant le matériau poreux (44).

7. Système selon la revendication 1, dans lequel le brûleur (20) comprend en outre des protubérances (60) en aval de l'entrée d'air (38), les protubérances (60) étant conçues pour diriger l'air et le carburant vaporisé dans une direction angulaire.

8. Système selon la revendication 1, dans lequel la sortie de brûleur (28) est définie par une partie d'un cône ; ayant éventuellement un angle inclus entre 0° et 120°.

9. Système selon la revendication 1, dans lequel le brûleur (20) comprend une cavité de vaporisation (40) en communication fluidique avec l'entrée de carburant, la sortie de carburant étant en communication fluidique avec la cavité de vaporisation (40), et la sortie de brûleur étant en communication fluidique avec l'entrée d'air et la sortie de carburant.

10. Système selon la revendication 9, dans lequel le brûleur (20) comprend en outre un matériau poreux thermoconducteur (44) dans la cavité de vaporisation (40) ; éventuellement dans lequel le matériau poreux est en communication fluidique avec la sortie de brûleur par l'intermédiaire uniquement de la sortie de carburant.

11. Système selon la revendication 10, dans lequel le brûleur comprend un élément chauffant (46) conçu pour chauffer le matériau poreux (44).

12. Procédé de combustion, consistant à :
fournir un système selon l'une quelconque des revendications 1 à 11 ;
introduire un premier carburant dans une première phase par l'entrée de carburant (34) du brûleur (20) du système ;
introduire un second carburant par l'entrée de carburant (34), le second carburant étant dans une seconde phase différente de la première phase, l'introduction du second carburant dans le brûleur (20) étant réalisée sans modifier le brûleur (20) ni le système.

13. Procédé selon la revendication 12, consistant en outre à réguler le débit du premier carburant ou du second carburant dans le brûleur (20) sur la base d'une mesure d'une sortie du brûleur (20).

14. Procédé selon la revendication 12, consistant en outre à mesurer une température ou une teneur en oxygène d'une sortie du brûleur (20).

15. Procédé selon la revendication 12, dans lequel la première phase ou la seconde phase est une phase liquide, et le procédé comprenant en outre l'étape consistant à vaporiser la phase liquide avec un matériau poreux thermoconducteur (44).
